# EUROPEAN PATENT SPECIFICATION

(11) **EP 3 745 337 B1**
(45) Date of publication and mention of the grant of the patent: **26.02.2025**
(21) Application number: 19177455.3
(22) Date of filing: 29.05.2019
(51) Int. Cl.: G06Q 30/02

(54) **METHOD AND SYSTEM FOR REAL-TIME AUDIENCE CHARACTERISATION**
VERFAHREN UND SYSTEME FÜR ECHTZEIT-PUBLIKUMSCHARAKTERISIERUNG
PROCÉDÉ ET SYSTÈME DE CARACTÉRISATION D'AUDIENCE EN TEMPS RÉEL

(43) Date of publication of application: 02.12.2020
(73) Proprietor: DMI Digital Media Institute GmbH, 80539 Munich (DE)
(72) Inventor: Goldberg, Frank, 81667 Munich (DE)
(74) Representative: Fleuchaus & Gallo Partnerschaft mbB

(56) References cited:
- WO-A1-2016/109455
- US-A1- 2011 028 160
- VASILIOS MAVROUDIS ET AL: "Eavesdropping Whilst You're Shopping: Balancing Personalisation and Privacy in Connected Retail Spaces", ARXIV.ORG, CORNELL UNIVERSITY LIBRARY, 201 OLIN LIBRARY CORNELL UNIVERSITY ITHACA, NY 14853, 14 July 2018 (2018-07-14), XP081248434, DOI: 10.1049/CP.2018.0018

## Description

### Field of the Invention

The present invention relates to a method and system for real-time audience characterisation, such as of target groups, of particular but by no means exclusive application in tracking an audience in public, especially in environments in which data protection provisions (e.g. GDPR and DSGVO) forbid collection of personalized data without consent.

### Background

It is known to conduct market media studies to determine the reach and performance of out-of-home (OoH), digital out-of-home (DOOH) or other outdoor advertising. These market media studies are used by media agencies for the planning of OoH and DOOH campaigns. In Germany, for example, the "Public & Private Screens" study provides a media currency for the German DOOH market.

Such advertising, however, is currently undergoing a major shift, where advertising content is played out in real-time to different target group segments (referred to as 'programmatic advertising'). Target group segments may be, for example, male, female, young or old audiences, heads of household or people with certain product interests. Real-time playout or presentation of advertising or other content benefits from real-time data on the target groups, that is, those to whom the advertising is directed. Various tracking technologies exist for capturing target group data in the environment of (digital) out-of-home advertising screens and posters.

In order to structure and standardize the tracking data used for (digital) out-of-home advertising, a 'tracking currency' has been developed for the (D)OOH market,. The tracking currency was developed in consultation with advertsing customers, (D)OOH advertising providers, technology providers and market research companies. The utility of this tracking currency arises from the fact that each tracking technology delivers different qualities and quantities of data. Thus, two different tracking technologies (e.g. Facetracking and Wi-Fi-Tracking) deliver different tracking values, even when deployed at the same time and location, owing to differences in the tracking methodology (e.g. tracking of eye contacts vs. tracking of smartphones). In addition, the same tracking technology (e.g. face tracking) from different manufacturers often delivers different tracking values at the same time and location, owing to different sensor qualities (giving rise to, for example, differences in resolution), different processing algorithms and different processing hardware performance.

However, media buyers (i.e. buyers of advertising space) need a reliable basis for campaign planning so that tracking data from different locations and different advertising screens (i.e. from different tracking technologies) is comparable. This concept of comparable performance values (reach and target group data) for the same category of advertising media (such as DOOH screens in different locations) is referred to as a 'media currency'. A media currency should exclude or compensate for differences in data collection and thus for distortions in the comparison of different tracking technologies.

One known Wi-Fi tracking technology records the MAC addresses of smartphones in the vicinity of a Wi-Fi tracking sensor (which generally comprises a standard Wi-Fi access point), so that-thanks to the prevalence of Wi-Fi-enabled devices-target groups can be detected or tracked when in the vicinity of a Wi-Fi tracking sensor installed next to or near DOOH advertising. The MAC address is a unique, manufacturer-assigned identifier for each internet-enabled device. However, the MAC addresses make smartphones individually recognizable, so the MAC address is considered personal data and hence subject to the provisions of the European General Data Protection Regulation (GDPR) and the German Basisc Data Protection Regulation (DSGVO).

These regulations stipulate that people (strictly speaking, their devices) captured by tracking technologies must be informed of the collection of their data and must be given the opportunity to object to collection of their data and that the data collected must be deleted if the affected people object. In many cases, however, this is practically impossible-especially with outdoor posters or large LED walls, such as on streets or in pedestrian zones.

Furthermore, many advertising media such as posters or digital screens and the associated tracking technology are located within, for example, airports or shopping centres and are operated by third party marketing and sales agencies rather than the site owners themselves. The tracking of persons or smartphones in the vicinity of the digital advertising space is therefore in the interest of these third party marketing and sales agencies, but not necessarily in the interest of the site owners, so it can be complicated or impossible for the third party marketing and sales agencies to inform any tracked individuals, if required to by such data protection provisions.

WO 2016/109455 A1, entitled *Method and Apparatus for Passively Detecting and Tracking Mobile Devices,* discloses a system in which detection devices (120) collect probe requests for different communication protocols (e.g., WiFi, Bluetooth, NFC, etc.) transmitted at regular intervals by a consumer device (e.g., a smartphone). Specific pieces of data are extracted from management frames in the probe requests, and are used to create a device model or profile that uniquely identifies the consumer device as the consumer walks throughout defined zones.

US 2011/028160 A1 discloses a method of location-triggered rewwards, involving detecting the presence of a mobile phone within an enclosed space and transmitting information relating to the presence to a server computer. The server computer processes an award for the presence of the mobile phone within the enclosed space, and the award is associated with a user account associated with the mobile phone.

V. Mavroudis and M. Veale (Eavesdropping Whilst You're Shopping: Balancing Personalisation and Privacy in Connected Retail Spaces, 201 Olin Library Cornell University, Ithaca, NY 14853, U.S.A. (14 July 2018), XP081248434, DOI: 10.1049/CP.2018.0018) provide a review of in-store tracking technologies, including the 'Go' store concept of Amazon (trade mark) which requires fine-grained, multi-modal tracking to function as a shop, and challenges in opting in or out of passive Wi-Fi tracking.

### Summary

According to a first aspect, the invention provides a method for real-time audience characterisation, the method comprising:
automatically detecting one or more events associated with and arising from audience members or potential audience members being in a proximity of a presentation device configured to present content (such as advertising, entertainment, news and/or infotainment);
recording or counting the events in anonymous form;
generating one or more characteristics of the audience or potential audience of the presented content by processing the events or the number thereof according to empirical data (such as survey data, conducted by questioning and/or observation) pertaining to the one or more characteristics of the audience or potential audience; and
outputting the one or more characteristics of the audience or potential audience;
wherein automatically detecting the one or more events comprises detecting Wi-Fi probe requests from Wi-Fi enabled devices of audience members or potential audience members in the vicinity of the presentation device with a wireless access point, and
the wireless access point comprises a kernel configured to control the wireless access point not to record or read-out content of the probe requests.

The empirical data may be stored in processed form, such that it can be multiplied by or divided into the number of recorded or counted events. The method may include normalizing the number of recorded or counted events according to the empirical data.

Audience or potential audience is referred to above, as it may not be possible to distinguish between people watching or listening to the presented content, and those apparently in a position to do so (hence 'potential' audience members) but disregarding the presented content or incapable of watching it or listening to it (perhaps owing to a sight or hearing problem).

The presentation device may comprise one or more displays, screens, speakers, and/or rollable or rotatable posters. Other controllable presentation devices are also suitable.

The one or more characteristics may comprise essentially any characteristics that may be ascertained empirically, especially by survey(s) of the population from which the audience or potential audience is drawn. In an embodiment, therefore, the one or more characteristics comprise:
i) a size of the audience or potential audience (e.g. 350 individuals);
ii) sex of the audience or potential audience (e.g. 40% female, 60% male);
iii) age of the audience or potential audience (e.g. 35% under 25 years, 50% between 25 and 55 years, 15% over 55 years);
iv) household size of the audience or potential audience (e.g. 20% 1 or 2, 55% 3 or 4, years, 25% 5 or more);
v) income of the audience or potential audience (e.g. 30% €3 000 or less per month, 40% €3 000 to €6 000 per month, 20% €6 000 to €10 000 per month, 10% over €10 000 per month); and/or
vi) product interests of the audience or potential audience.

The kernel may be configured to prompt the generation of a random or pseudo-random number or string in response to detection of a probe request.

In an example, the empirical data includes data that correlates number of probe requests with a size of the audience or potential audience of the presented content.

In another embodiment, automatically detecting the one or more events comprises detecting faces in the vicinity of the presentation device with a facetracking system. In an example, the empirical data includes data that correlates number of recognized faces with a size of the audience or potential audience of the presented content.

In another embodiment, automatically detecting the one or more events comprises employing one or more Bluetooth (trade mark) beacons installed in the vicinity of the advertising panel, and detection software (or app) configured to detect Bluetooth beacon signals and installed on smartphones of audience members or potential audience members, whereby the detection software responds to the Bluetooth beacons by transmitting an ID from the Bluetooth beacon signal to the system, thereby alerting the system of the proximity of the smartphone.

It should be noted that the system may include two or more all of these detection approaches (i.e. WAP, facetracking and Bluetooth), thereby increasing the accuracy of the results.

In another embodiment, the method includes controlling presentation of the content by the presentation device according to the one or more characteristics of the audience or potential audience.

The presented content may comprise visual content and/or audio content.

According to a second aspect, the invention provides a system for real-time audience characterisation, the system comprising:
an event detector configured to automatically detecting one or more events associated with and arising from an audience members or potential audience members in a proximity of a presentation device configured to present content (such as advertising, entertainment, news and/or infotainment);
an event counter configured to record or count the events in anonymous form;
a controller (which may include the event detector) configured to generate one or more characteristics of the audience or potential audience of the presented content by processing the events or the number thereof according to empirical data pertaining to the one or more characteristics of the audience or potential audience;
a wireless access point configured to detect Wi-Fi probe requests from Wi-Fi enabled devices in the vicinity of the presentation device; and
an output configured to output the one or more characteristics of the audience or potential audience;
wherein the wireless access point comprises a kernel configured to control the wireless access point not to record or read-out content of the probe requests.

In an embodiment, the one or more characteristics comprise:
i) a size of the audience or potential audience;
ii) sex of the audience or potential audience;
iii) age of the audience or potential audience;
iv) household size of the audience or potential audience;
v) income of the audience or potential audience; and/or
vi) product interests of the audience or potential audience.

The kernel may be configured to prompt the generation of a random or pseudo-random number or string in response to detection of a probe request.

In an embodiment, the empirical data includes data that correlates a number of probe requests with a size of the audience or potential audience (that is, the characteristic comprises the number of audience or potential audience) in the proximity of the presentation device.

In an embodiment, the system comprises a facetracking system configured to detect faces in the vicinity of the presentation device.

In another embodiment, the system includes or employs one or more Bluetooth (trade mark) beacons installed in the vicinity of the advertising panel, and detection software (or app) configured to detect Bluetooth beacon signals and installed on smartphones of the audience members or potential audience members, wherein the detection software is configured to respond to the Bluetooth beacons by transmitting an ID from the Bluetooth beacon signal to the system, thereby alerting the system of the proximity of the smartphone.

In an embodiment, the system further comprises a content scheduler configured to control presentation of the content by the presentation device. In an example, the system is configured to control the content scheduler according to the one or more characteristic of the audience or potential audience.

According to a third aspect, the invention provides computer program code configured, when executed by one or more processors, to implement the method of the first aspect. This aspect also provides a computer-readable medium (which may be non-transitory), comprising such computer program code.

It should be noted that any of the various individual features of each of the above aspects of the invention, and any of the various individual features of the embodiments described herein including in the claims, can be combined as suitable and desired.

### Drawings

In order that the invention may be more clearly ascertained, embodiments will now be described by way of example with reference to the following drawing, in which:
Figure 1 is a schematic view of a system 10 for real-time audience tracking, according to an embodiment of the present invention;
Figure 2 is a block diagram of the main components of the memory of the system of figure 1;
Figure 3 is a block diagram of the system controller and advertising panel of the system of figure 1;
Figures 4A and 4B are schematic plots illustrating the effect of the processing of the tracking data performed by the system controller of the system of figure 1; and
Figure 5 is a flow diagram of the operation of the system of figure 1.

### Detailed description

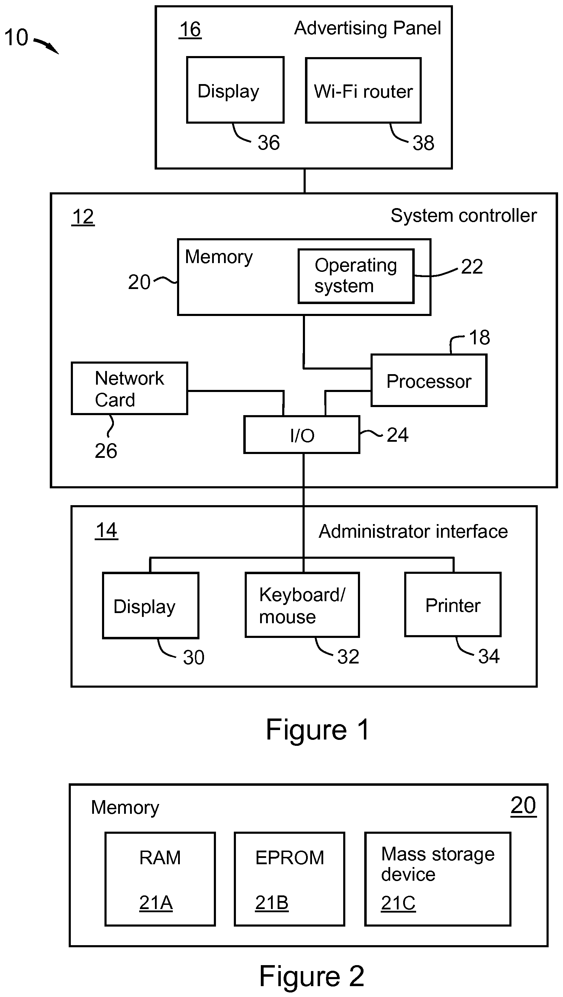

Figure 1 is a schematic view of a system 10 for real-time audience tracking (especially of predefined target groups) in an advertising environment, according to an embodiment of the present invention, in which only the more important operative components are shown for clarity. The following description of system 10 relates to its use in tracking one or more predefined audiences for advertising purposes, but system 10 is also suitable (with minor modification) for tracking predefined target groups for other purposes-such as to assess the use of public spaces or infrastructure (such as parks or playgrounds), in order to determine whether sufficient capacity is available.

System 10 includes a system controller 12, an administrator interface 14 and a presentation device in the form, in this embodiment, of an advertising panel 16. System controller 12 has a processor 18 and a memory 20. Instructions and data to control the operation of processor 18 are stored in memory 20, which is in data communication with processor 18. Typically, system 10 includes both volatile and non-volatile memory and more than one of each type of memory; however, such memories are collectively represented by memory 20 in the schematic representative of figure 1.

System controller 12 has an operating system 22 that is executable by processor 18, and an input/output (I/O) interface 24 for communicating with peripheral devices of system 10. The peripheral devices may be intelligent devices with their own memory for storing associated instructions and data for use with the input/output interface 22 or the peripheral devices.

In addition, system controller 12 includes a communications interface, in this example in the form of a network card 26. Network card 26 allows system controller 12 to communicate with advertising panel 16 via a suitable network (not shown), which may be an intranet, the internet, a cellular network or otherwise (or a combination of these). Network card 26 also allows system 10 to, for example, send tracking results or other information to a remote controller, server or database and receive data or commands from the central controller, server or database which, though not shown in this figure, may be a part of system 10.

Administrator interface 14 includes peripheral devices that communicate with system controller 12. These peripheral devices comprise one or more displays 30, a keyboard/mouse 32 and a printer 34.

Advertising panel 16 is configured to be located remotely from system controller 12, so that it can be deployed at a site deemed suitable for advertising to the desired, target groups. Advertising panel 16 includes one or more displays 36 for displaying advertising content, and a wireless access point (WAP) in the form of a Wi-Fi router 38. Display 36 may be digital, as it is in this embodiment, but it need not be-the display 36 (or one of displays 36) may comprise a board for supporting a poster, such as a scrollable poster. Advertising panel 16 may also include a speaker or speakers (not shown) for outputting audio advertising content. In addition, Wi-Fi router 38 need not be physically housed within advertising panel 16: it may instead be located nearby, such as to monitor a specific volume of the environment from which people may view the advertising material presented or displayed by advertising panel 16. Indeed, in some variations of this embodiment, it may be regarded as a part of system 10 but not of advertising panel 16, while communicating with system controller 12 via advertising panel 16 or via a cellular network.

Although only one advertising panel 16 is depicted, it should also be understood that system 10 would typically include a plurality of identical or comparable advertising panels 16. The advertising content outputted by advertising panel 16 may be stored locally (i.e. in advertising panel 16), or in memory 20.

In an alternative embodiment, system 10 includes software products executable on personal computing devices, portable computing devices (such as tablet computers or smartphones) or the like. These software products are operable by users to allow users to enter information remotely, and submit information to or access information from system controller 12, and hence allow such computing devices to function at least to some extent as user interfaces. This information typically comprises advertising content (for outputting by advertising panel 16) and/or advertising scheduling information usable by system 10 to control advertising panel 16 to output specific content according to a specified schedule.

Furthermore, it should be noted that system 10 may be distributed, and that additional hardware may be included as a part of system 10, or hardware may be omitted as required for the specific implementation.

Figure 2 is a block diagram of the main components of memory 20. Memory 20 includes RAM 21A, EPROM 21B and a mass storage device 21C. RAM 21A typically temporarily holds program files for execution by the processor 18 and related data. EPROM 21B may be a boot ROM device and/or may contain some system or other code.

Mass storage device 21C is typically used to store advertising content, and software programs whose integrity may be verified and/or authenticated by processor 18 using protected code from EPROM 21B or elsewhere, as well as at least some of the basic data used as the input to those software programs. Mass storage device 21C may also be used to store tracking data (as described below); the tracking data-in raw or processed form-may also be displayed (such as on display 30) and/or transmitted by system 10 to a user on another (e.g. remote) device.

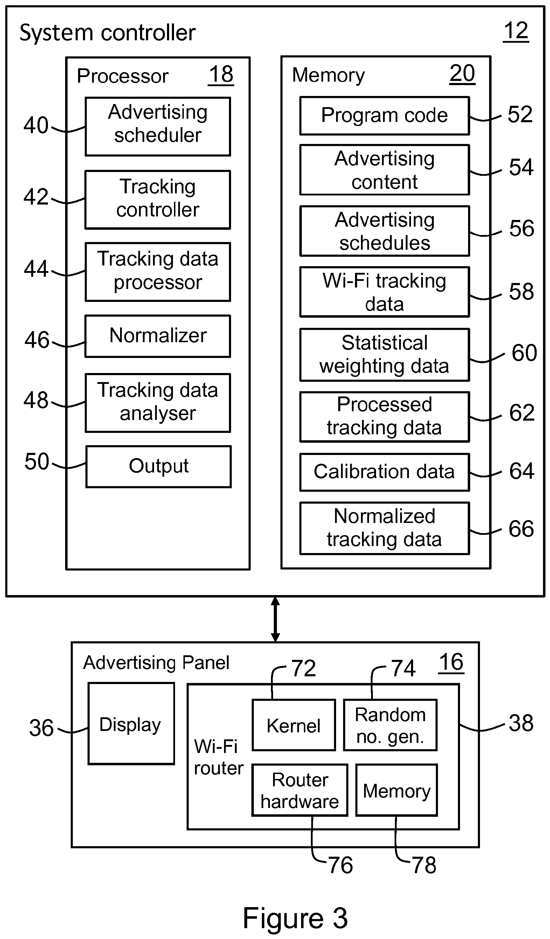

Figure 3 is a block diagram of system controller 12 and advertising panel 16, showing processor 18 and memory 20, including the main components of processor 18. System controller 12 is, in this embodiment, implemented as a data management platform (DMP) comprising a high-performance server and database. The main components of processor 18 are adapted to implement various user commands (entered via user interface 16) and programmed functions (embodied as program code), in order-for example-to control the outputting of advertising content by advertising panel 16, and the collection and processing of that tracking data.

Thus, processor 18 includes an advertising scheduler 40, an event counter in the form of a tracking controller 42, a tracking data processor 44, a normalizer 46, tracking data analyser 48, and an output 50. Memory 20 includes program code 60 (which, when executed, implements the operations described below), advertising content 54, advertising schedules 56, Wi-Fi tracking data 58, statistical weighting data 60, processed tracking data 62, calibration data 64, and normalized tracking data 66.

Advertising scheduler 40 is configured to control the timing of the presentation of advertising content 54 according to advertising schedules 56. It will be appreciated, however, that-as is the case with many components of system 10, which may be distributed-advertising content 54 and advertising schedules 56 may be located remotely. Also, as is described below, advertising scheduler 40 is configured so that it can be controlled on the additional basis of normalized tracking data 66.

It should also be noted that advertising content 54 may not be stored in system controller 12. Instead, system 10 may include a playout system (typically in the form of a PC), generally located near or within advertising display 16 and connected via the internet (such as over a cellular network) to system controller 12. However, this playout system may alternatively be located remote from advertising panel 16 and be configured to stream (e.g. advertising) content to advertising panel 16. In these arrangements, the playout PC receives the information as to which content to play from advertising scheduler 40.

In a variation of that arrangement, the playout system-rather than system controller 12-includes an advertising scheduler, such that system 10 is distributed. In a still further variation, the content is provided by such a playout system, but that playout system is merely controlled by the advertising scheduler (whether a part of the playout system or of system controller 12): the playout system does not form a part of system 10.

Tracking controller 42 is configured to mediate the receipt of tracking data from advertising panel 16, including to store that data, time-stamped according to time of receipt, in Wi-Fi tracking data 58. The tracking data comprise random or pseudo-random numbers, each issued by advertising panel 16 in response to the detection by Wi-Fi router 38 of a probe request from a user's Wi-Fi enabled device. Alternatively, the tracking events may comprise a simple ping generated each time a user Wi-Fi device probes Wi-Fi router 38, or a numerical tally of the number of times Wi-Fi router 38 detects a probe request from a user Wi-Fi enabled device over a pre-set accounting period. (It should be noted that, generally, a plurality of probe requests will be detected by Wi-Fi router 38 from a particular user Wi-Fi enabled device while that user is in the vicinity of Wi-Fi router 38.)

Tracking data processor 44 is configured to process this tracking data using statistical weighting data 60. Statistical weighting data 60 are data, typically collected empirically (such as by a market research company), that indicate the ratio of the actual number of people in the advertising content viewing area or zone, and the number of probe requests from people in the advertising content viewing area or zone with active Wi-Fi enabled devices. This allows system 10 to apply a correction for those in the advertising audience without a Wi-Fi enabled device, those with more than one Wi-Fi enabled device, and-generally most significantly-those from whose devices Wi-Fi router 38 detects a plurality of probe requests. Statistical weighting data 60 is also, in this embodiment, time-dependent. For example, times of the day in which elderly people are present in higher numbers may give rise to proportionally lower numbers of Wi-Fi enabled devices, owing to the lower penetration of Wi-Fi enabled devices in that demographic. Hence, a greater weighting would be given to the detected number of Wi-Fi enabled devices in those times. Likewise, for any particular time window (e.g. 09:00 to 09:30), certain days of the week may have advertising audiences with either a higher or lower numbers of Wi-Fi enabled devices than others; statistical weighting data 60 can also include weighting for that effect-as well as for further variations in specific days (e.g. religious holidays, public/bank holidays, days with high-profile sporting events, etc).

In use, tracking data processor 44 modifies (such as by division) each detected number of probe requests from Wi-Fi enabled devices according to the appropriate entry or entries in statistical weighting data 60-including interpolating between entries if necessary. Tracking data processor 44 then outputs the result, in the form of processed tracking data, to processed tracking data 62. The processed tracking data thus indicates the real number of advertising audience members likely to have viewed or otherwise been exposed to the advertising.

Normalizer 46 is configured to normalize the processed tracking data according to calibration data 64. The calibration data comprises survey data collected in the vicinity of advertising panel 16 (again, such as by a market research company), comprising anonymous information (i.e. demographic information without identifying personal references) concerning visitors to the location of the advertising panel 16. As with statistical weighting data 60, calibration data 64 is collected at different times of the days, days of the week, etc., and includes as much demographic information concerning the expected advertising audience as can feasibly or economically be collected. For example, calibration data 64-in this embodiment-includes:
the proportion of male visitors aged 30 to 50 in Shell (trade mark) petrol stations on Tuesday mornings between 09:00 and 10:00;
the proportion of female visitors aged 20 to 30 in shopping centres on Tuesday afternoons between 15:00 and 16:00;
the proportion of heads of household aged 20 to 30 in EDEKA (trade mark) supermarkets on Wednesday afternoons between 13:00 and 16:00;
the proportion of people with a household net income between €4,000 and €5,000 per month in airports (or in a specified airport) on Thursday evenings between 18:00 and 20:00.

In this embodiment, calibration data 64 also includes all relevant variations of these examples, by sex, time window, day of the week, household income bracket, etc. For example, if an advertising panel 16 were to be erected in a Mobil (trade mark) petrol station, calibration data 64 would include demographic information pertaining to Mobil petrol stations in the applicable region, if not from the specific petrol region.

Normalizer 46 thus normalizes processed tracking data 62 according to calibration data 64 (though it could also be described as normalizing calibration data 64 according to processed tracking data 62). Processed tracking data 62 is dynamic, being collected in real- or near-real-time, whereas calibration data 64 is essentially static (though subject to periodic updating); the resulting output of normalizer 46 comprises normalized tracking data and is stored in normalized tracking data 66 or output via output 50 (such as to display 30 or via network card 26 to another computing device).

For example, market research may reveal that typically, at a particular shopping centre of interest:
there are 100 visitors in a specified time window, 60% of which are female and 40% male;
70% of these (both male and female) carry a smartphone;
90% of the carried smartphones (of both male and female visitors) have the Wi-Fi function enabled.

In this scenario, Wi-Fi tracking data 58 records 1000 Wi-Fi probe requests in that timeframe, so yields statistical weighting data of 0.1 (i.e. one visitor per 10 probe requests), which can be used from that point on as statistical weighting data 60. This survey also yields calibration data of 60% female and 40% male.

(It should be noted that the statistical weighting of the Wi-Fi tracking data 58 and the subsequent normalization according to calibration data 64 may be combined. In the above example, the statistical weighting data and calibration data may be combined, such that in the same time window on future occasions, normalized tracking data 66 can be determined on the basis of 6 female advertising audience members for every 100 detected probe requests, and 4 male advertising audience members for every 100 detected probe requests.)

Thus, by-in effect-merging the two data sets (the processed tracking data 62 and the calibration or survey data 64) and thereby generating the normalized tracking data 66, system 10 can generate credible, real-time information on the visitors and hence advertising audience at the locations of advertising panel 16. This information can be used in at least three valuable ways.

For example, advertising scheduler 40 can be controlled on the additional basis of normalized tracking data 66. That is, the advertising content 54 selected by advertising scheduler 40 to be outputted by advertising panel 16 can be varied according to normalized tracking data 66. Tracking data analyser 48 is configured to perform this function: it inputs normalized tracking data 66 and, if-for example-it detects a spike to audience numbers at a time found to be male dominated, may instruct advertising scheduler 40 to adjust the ratio of male- to female-targeted advertising content accordingly (such as by increasing in real-time the proportion of male-targeted advertising). This amounts to the targeted playout of advertising or generalized content on, in this example, digital out of home media.

Secondly, tracking data analyser 48 can be used to analyse variations in normalized tracking data 66 as a function of changes in the outputted advertising content 54, by correlating the time of significant variations in audience numbers with the time of changes in outputted advertising content 54. Thus, the performance (reach, target groups) of the advertising media in the out-of-home space can be gauged. The results of tracking data analyser 48 can be outputted for human inspection, and/or inputted into advertising scheduler 40, such as to control advertising scheduler 40 to favour the outputting of content that produces the largest audience (or audience with desired demographic characteristics).

Thirdly, normalized tracking data 66 provides a measure of visitors numbers and flows, which may be used in-for example-calculating rents in shopping centres or for supply management in restaurants or retail outlets, such as airports and motorway service areas.

Importantly, in the collection by tracking controller 42 of the tracking data from advertising panel 16, personal data is not collected, so it is not necessary to inform visitors (i.e. potential advertising audience members) about the collection of data or to give those visitors the opportunity to object to that collection. This is implemented as follows.

Wi-Fi router 38 includes, in particular, a kernel 72, a random number generator 74, router hardware 76 and memory 78. Wi-Fi router 38 is configured to facilitate the counting of Wi-Fi enabled devices in the vicinity (e.g. within a radius of approximately 10 m) of Wi-Fi router 38 at any given time, without recording personalized data.

Kernel 72 controls the router hardware 76 of Wi-Fi router 38, and specifically all communication between the software of Wi-Fi router 38 and the router hardware 76. In this embodiment, kernel 72 is configured such that, when Wi-Fi router 38 registers that a probe request has been made by a Wi-Fi enabled device, the content of the probe request is neither recorded nor read out by Wi-Fi router 38; it is not stored in Wi-Fi router 38 and is not accessible at any time by other components of system 10.

Detecting a probe request triggers the generation by random number generator 74 of a random or pseudo-random number or string, which is then used for counting the number of received probe requests. In time, memory 78 of Wi-Fi router 38 will contain a series of randomly or pseudo-randomly generated numbers or strings, each of which represents a measured probe request, but not its contents. Kernel of Wi-Fi router 38 has this built-in randomization, so Wi-Fi router 38 cannot read the contents of the probe requests or pass them on to the software services in Wi-Fi router 38 or system controller 12. Only these random strings are passed on for further processing, including counting the strings and/or transmitting them (or a tally thereof) to system controller 12.

Thus, Wi-Fi router 38 cannot discern whether a probe request comes from a smartphone or other device from which it has previously detected probe requests (i.e. of a returning visitor) or from a new smartphone.

Data protection provisions therefore do not apply, as no personal data-whether in the form of MAC address, a list of previous SSIDs or even signal strength-is collected. Only the information that a probe request has been made is collected, without the collection of the content of the probe request: the content of the probe request is neither recorded nor read out or stored in Wi-Fi router 38.

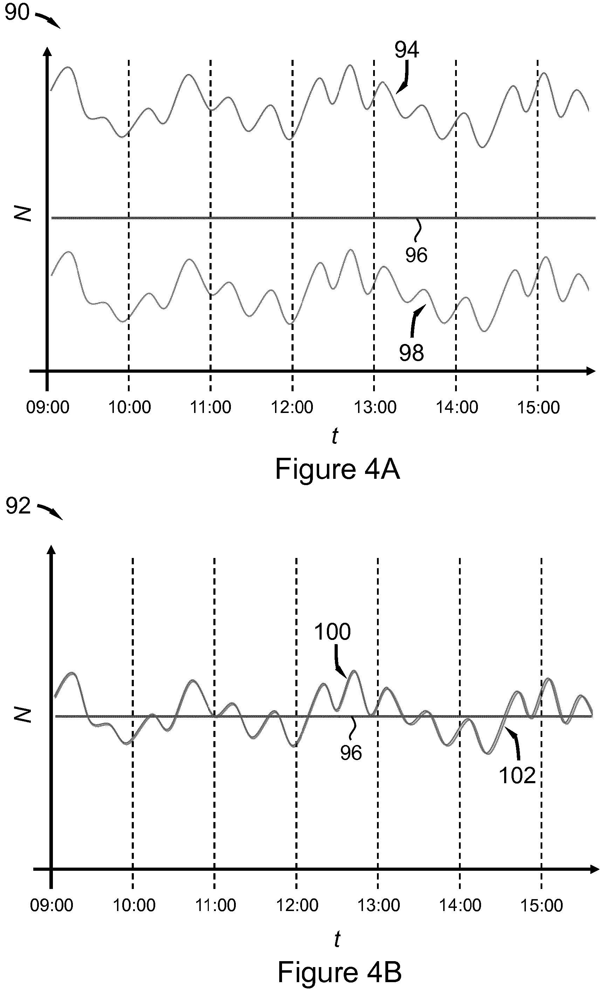

Figures 4A and 4B are schematic plots 90, 92 respectively, illustrating the effect of the processing of the tracking data performed by system controller 12. Schematic or notional plots 90, 92 illustrate the apparent size of the advertising audience N (normalized against the true size of the audience) versus time of day t.

Plot 90 of figure 4A has three curves: Wi-Fi probe request curve 94, survey data curve 96 and facetracking curve 98 (discussed further below). Survey data curve 96 is a horizontal line, because it represents the empirically obtained true size of the advertising audience, normalized against itself.

Wi-Fi probe request curve 94 (which is essentially a notional plot of number of the number of detected Wi-Fi probe requests normalized against the survey data) varies, because it is affected by largely random factors (such as how many Wi-Fi enabled devices are in the vicinity of advertising panel 16, and how many are switched on) and is also too high, because many probe requests may be received from a single Wi-Fi enabled device.

Plot 92 of figure 4B illustrates the effect of the processing of the data by system controller 12 by reference to statistical weighting data 60 and calibration data 64. Hence, curve 100 of figure 4B represents the normalized tracking data 66 (normalized against the survey data). It will be seen that the long-term average of normalized tracking data 66 corresponds to the survey data values. Curve 100 still includes departures from the survey data, owing to the random factors referred to above, but provides a credible estimate of the true size of the advertising audience.

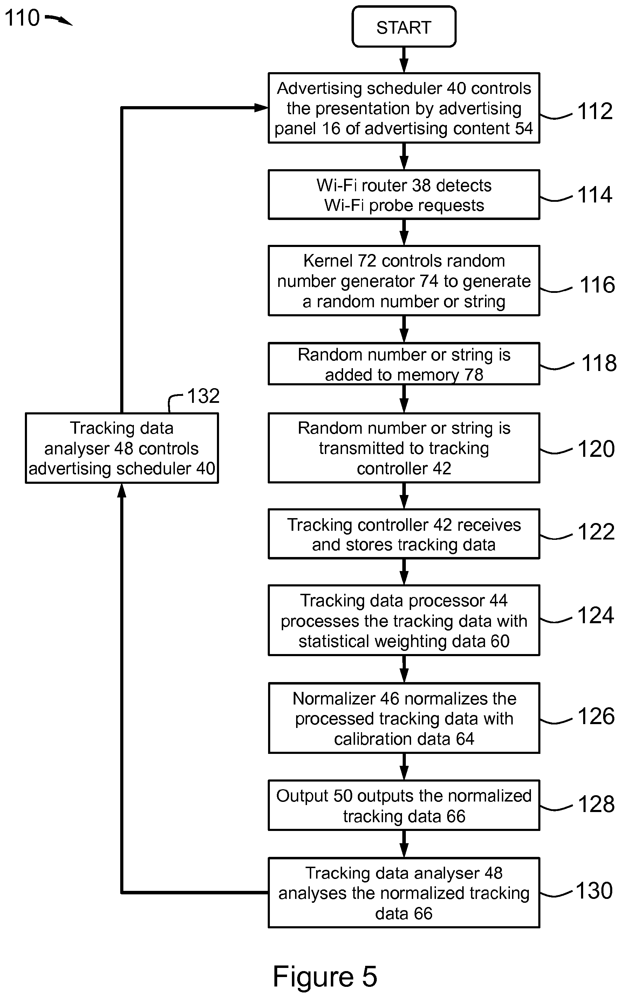

Figure 5 is a flow diagram 110 of the operation of system 10. (It will be appreciated that, in practice, system 10 operates essentially continuously.)

At step 112, advertising scheduler 40 controls the presentation by advertising panel 16 of advertising content 54. At step 114, Wi-Fi router 38 detects probe requests and, at step 116, kernel 72 of Wi-Fi router 38 responds by controlling random number generator 74 to generate a random or pseudo-random number or string.

At step 118, the random number or string is added to memory 78 of Wi-Fi router 38 and, at step 120, is transmitted to tracking controller 42. The transmission of the random number or string to tracking controller 42 may be performed either in conjunction with the generat,ion of the random number or string or periodically with all other random numbers or strings generated and stored to memory 78 since the last time that they were transmitted to tracking controller 42. In the latter example, this is done at the end of each accounting/survey period (e.g. each 30 or 60 min). Alternatively, a simple count of the number of random numbers or strings may be sent to tracking controller 42, either indicating that another random number or string has been generated, or that a probe request has been detected, or that a particular number of events are reflected by the data stored to memory 78.

At step 122, tracking controller 42 receives the tracking data and stores it, time-stamped, in Wi-Fi tracking data 58. At step 124, tracking data processor 44 processes the tracking data using statistical weighting data 60, and at step 126 normalizer 46 normalizes the processed tracking data according to calibration data 64 and stores the results in normalized tracking data 66. At step 128, output 50 outputs the normalized tracking data 66.

Optionally, at step 130 (which occurs in parallel with step 128), tracking data analyser 48 inputs and analyses the normalized tracking data 66 and, at step 132, controls advertising scheduler 40 according to that analysis.

It will be understood to persons skilled in the art of the invention that many modifications may be made without departing from the scope of the invention, in particular it will be apparent that certain features of embodiments of the invention, and alternative techniques as would be apparent to the skilled person, can be employed to form further embodiments.

For example, the embodiment of figure 1 employs Wi-Fi router with a modified kernel configured to prompt the generation of a random number, but not to record or read out the content of a probe request. In an alternative embodiment, a facetracking system is used instead of a Wi-Fi router for the detection of the advertising audience, wherein the facetracking system does not record in any way a detected image of a face. Rather, the facetracking system merely records or registers instances of identifying the occurrence of a face in its field of view, but not the face itself. As in the embodiment of figure 1, the output of the facetracking system (whether in the form of random numbers or strings, a counter indicating the number of face detected, or otherwise) is processed by a system controller comparable in most respects to that of system 10. Hence, the output of the facetracking system is similarly processed based on statistical weighting data and normalized according to calibration data. Unlike system 10, it is expected that the statistical weighting data will tend to increase the unprocessed output of the facetracking system, as facetracking systems commonly miss faces (owingto limited fields of view and the posture of the person) so underestimate the number of people in the vicinity.

Figure 4A represents this effect schematically. Facetracking curve 98 is lower than survey data curve 96 and especially Wi-Fi probe request curve 94, owing to the limitations of the facetracking system. Multiple counts of a single individual are also less likely with the facetracking system than with system 10, because a single individual may be tracked as he or she passes through the zone monitored by the facetracking system (typically in front of an advertising panel), so be outputted as a single event. This may be contrasted with the multiple probe requests that system 10 is likely to detect from that person's smartphone during the same transit.

Referring to figure 4B, however, it will be seen that-once the output of the facetracking system has been processed based on the statistical weighting data and the calibration data-a normalized tracking data curve 102 is generated that also has a long-term average that corresponds to survey data values.

In yet another alternative, the system employs one or more Bluetooth (trade mark) beacons installed in the vicinity of the advertising panel, and detection software (or app) configured to detect Bluetooth beacon signals and installed on smartphones of audience members or potential audience members. The detection software responds to the Bluetooth (trade mark) beacons by transmitting an ID from the Bluetooth beacon signal to the system, thereby alerting the system of the proximity of the smartphone. In other respects the system operates similarly to system 10 or to the facetracking embodiment.

It is to be understood that, if any prior art is referred to herein, such reference does not constitute an admission that the prior art forms a part of the common general knowledge in the art in any country.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

## Claims

1. A computer-implemented method for real-time audience characterisation, the method comprising:
automatically detecting one or more events associated with and arising from audience members or potential audience members in a proximity of a presentation device configured to present content;
recording or counting the events in anonymous form;
generating one or more characteristics of an audience or potential audience of the presented content by processing the events or the number thereof according to empirical data pertaining to the one or more characteristics of the audience or potential audience; and
outputting the one or more characteristics of the audience or potential audience;
**characterized in that**
automatically detecting the one or more events comprises detecting Wi-Fi probe requests from Wi-Fi enabled devices of audience members or potential audience members in the vicinity of the presentation device with a wireless access point, and
the wireless access point comprises a kernel configured to control the wireless access point not to record or read-out content of the probe requests.

2. A method as claimed in claim 1, wherein the one or more characteristics comprise:
i) a size of the audience or potential audience;
ii) sex of the audience or potential audience;
iii) age of the audience or potential audience;
iv) household size of the audience or potential audience;
v) income of the audience or potential audience; and/or
vi) product interests of the audience or potential audience.

3. A method as claimed in either claim 1 or 2, wherein the kernel is configured to prompt the generation of a random or pseudo-random number or string in response to detection of a probe request.

4. A method as claimed in any one of claims 1 to 3, wherein the empirical data includes data that correlates a number of probe requests with a size of the audience or potential audience of the presented content.

5. A method as claimed in any one of the preceding claims, wherein automatically detecting the one or more events
(i) comprises detecting faces in the vicinity of the presentation device with a facetracking system; and/or
(ii) comprises employing one or more Bluetooth beacons installed in the vicinity of the presentation device, and detection software configured to detect Bluetooth beacon signals and installed on smartphones of audience members or potential audience members, whereby the detection software responds to the Bluetooth beacons by transmitting an ID from the Bluetooth beacon signal to the system, thereby alerting the system of the proximity of the smartphone.

6. A method as claimed in any one of the preceding claims, wherein automatically detecting the one or more events comprises detecting faces in the vicinity of the presentation device with a facetracking system, and the empirical data includes data that correlates a number of recognized faces with a size of the audience or potential audience of the presented content.

7. A method as claimed in any one of the preceding claims, including controlling presentation of the content by the presentation device according to the one or more characteristics of the audience or potential audience.

8. A method as claimed in any one of the preceding claims, wherein the presented content comprises visual content and/or audio content.

9. A system for real-time audience characterisation, the system comprising:
an event detector configured to automatically detecting one or more events associated with and arising from audience members or potential audience members in a proximity of a presentation device configured to present content;
an event counter configured to record or count the events in anonymous form;
a controller configured to generate one or more characteristics of the audience or potential audience of the presented content by processing the events or the number thereof according to empirical data pertaining to the one or more characteristics of the audience or potential audience; and
an output configured to output the one or more characteristics of the audience or potential audience;
**characterized by**
a wireless access point configured to detect Wi-Fi probe requests from Wi-Fi enabled devices in the vicinity of the presentation device; and
the wireless access point comprises a kernel configured to control the wireless access point not to record or read-out content of the probe requests.

10. A system as claimed in claim 9, wherein the one or more characteristics comprise:
i) a size of the audience or potential audience;
ii) sex of the audience or potential audience;
iii) age of the audience or potential audience;
iv) household size of the audience or potential audience;
v) income of the audience or potential audience; and/or
vi) product interests of the audience or potential audience.

11. A system as claimed in either claim 9 or 10, wherein the kernel is configured to prompt the generation of a random or pseudo-random number or string in response to detection of a probe request.

12. A system as claimed in any one of claims 9 to 11, wherein the empirical data includes data that correlates a number of probe requests with a size of the audience or potential audience of the presented content.

13. A system as claimed in either claim 9 or 10, further comprising
(i) a facetracking system configured to detect faces in the vicinity of the presentation device; and/or
(ii) includes or is configured to employ one or more Bluetooth (trade mark) beacons installed in the vicinity of the presentation device, and detection software configured to detect Bluetooth beacon signals and installed on smartphones of audience members or potential audience members, wherein the detection software is configured to respond to the Bluetooth beacons by transmitting an ID from the Bluetooth beacon signal to the system, thereby alerting the system of the proximity of the smartphone.

14. A system as claimed in any one of claims 9 to 13, further comprising a content scheduler configured to control presentation of the content by the presentation device.

15. A system as claimed in claim 14, configured to control the content scheduler according to the one or more characteristics of the audience or potential audience.

16. A system as claimed in claim 9, further comprising a facetracking system configured to detect faces in the vicinity of the presentation device, wherein the empirical data includes data that correlates a number of recognized faces with a size of the audience or potential audience of the presented content.

17. Computer program code configured, when executed by one or more processors, to implement the method of any one of claims 1 to 8.

18. A computer-readable medium, comprising the computer program code of claim 17.

## Patentansprüche

1. Computerimplementiertes Verfahren zur Echtzeitpublikumscharakterisierung, wobei das Verfahren Folgendes umfasst:
automatisches Erkennen eines oder mehrerer Ereignisse, die Mitgliedern des Publikums oder potenziellen Mitgliedern des Publikums in einer Nähe einer zum Präsentieren von Inhalt konfigurierten Präsentationsvorrichtung zugeordnet sind und von ihnen herrühren;
Erfassen oder Zählen der Ereignisse in anonymer Form;
Erzeugen eines oder mehrerer Charakteristika eines Publikums oder potenziellen Publikums des präsentierten Inhalts durch Verarbeiten der Ereignisse oder ihrer Anzahl entsprechend empirischen Daten, die die eine oder mehrere Eigenschaften des Publikums oder potenziellen Publikums betreffen; und
Ausgeben der einen oder mehrerer Eigenschaften des Publikums oder potenziellen Publikums;
**dadurch gekennzeichnet, dass**
das automatische Erkennen des einen oder mehrerer Ereignisse das Erkennen von WLAN-Sondenanfragen von WLAN-fähigen Vorrichtungen von Mitgliedern des Publikums oder potenziellen Mitgliedern des Publikums in der Nähe der Präsentationsvorrichtung mit einem kabellosen Zugriffspunkt umfasst, und
der kabellose Zugriffspunkt einen Kernel umfasst, der dazu konfiguriert ist, den kabellosen Zugriffspunkt so zu steuern, dass er den Inhalt der Sondenanfragen nicht erfasst oder ausliest.

2. Verfahren nach Anspruch 1, wobei die eine oder mehrere Eigenschaften umfassen:
i) eine Größe des Publikums oder potenziellen Publikums;
ii) das Geschlecht des Publikums oder potenziellen Publikums;
iii) das Alter des Publikums oder potenziellen Publikums;
iv) die Haushaltsgröße des Publikums oder potenziellen Publikums;
v) das Einkommen des Publikums oder potenziellen Publikums; und/oder
vi) Produktinteressen des Publikums oder potenziellen Publikums.

3. Verfahren nach Anspruch 1 oder 2, wobei der Kernel dazu konfiguriert ist, die Erzeugung einer Zufalls- oder Pseudozufallszahl oder -zeichenfolge in Reaktion auf die Erkennung einer Sondenanfrage auszulösen.

4. Verfahren nach einem der Ansprüche 1 bis 3, wobei die empirischen Daten Daten beinhalten, die eine Anzahl von Sondenanfragen einer Größe des Publikums oder potenziellen Publikums des präsentierten Inhalts zuordnen.

5. Verfahren nach einem der vorangehenden Ansprüche, wobei das automatische Erkennen des einen oder mehrerer Ereignisse:
(i) das Erkennen von Gesichtern in der Nähe der Präsentationsvorrichtung mit einem Gesichtsverfolgungssystem umfasst; und/oder
(ii) das Einsetzen eines oder mehrerer in der Nähe der Präsentationsvorrichtung installierter Bluetooth-Baken und von Erkennungssoftware, die dazu konfiguriert ist, Bluetooth-Bakensignale zu erkennen, und auf Smartphones von Mitgliedern des Publikums oder potenziellen Mitgliedern des Publikums installiert ist, umfasst, wobei die Erkennungssoftware auf die Bluetooth-Baken durch Übertragen einer ID von dem Bluetooth-Baken-Signal an das System reagiert, wodurch das System auf die Nähe des Smartphones aufmerksam gemacht wird.

6. Verfahren nach einem der vorangehenden Ansprüche, wobei das automatische Erkennen des einen oder mehrerer Ereignisse das Erkennen von Gesichtern in der Nähe der Präsentationsvorrichtung mit einem Gesichtsverfolgungssystem umfasst und die empirischen Daten Daten beinhalten, die eine Anzahl erkannter Gesichter einer Größe des Publikums oder potenziellen Publikums des präsentierten Inhalts zuordnen.

7. Verfahren nach einem der vorangehenden Ansprüche, welches das Steuern der Präsentation des Inhalts durch die Präsentationsvorrichtung entsprechend der einen oder mehrerer Eigenschaften des Publikums oder potenziellen Publikums umfasst.

8. Verfahren nach einem der vorangehenden Ansprüche, wobei der präsentierte Inhalt visuellen Inhalt und/oder Audioinhalt umfasst.

9. System zur Echtzeitpublikumscharakterisierung, wobei das System umfasst:
einen Ereignisdetektor, dazu konfiguriert, eines oder mehrere Ereignisse, die Mitgliedern des Publikums oder potenziellen Mitgliedern des Publikums in einer Nähe einer zum Präsentieren von Inhalt konfigurierten Präsentationsvorrichtung zugeordnet sind und von ihnen herrühren, automatisch zu erkennen;
einen Ereigniszähler, dazu konfiguriert, die Ereignisse in anonymer Form zu erfassen oder zu zählen;
eine Steuerung, dazu konfiguriert, ein oder mehrere Charakteristika des Publikums oder potenziellen Publikums des präsentierten Inhalts durch Verarbeiten der Ereignisse oder ihrer Anzahl entsprechend empirischen Daten, die die eine oder mehrere Eigenschaften des Publikums oder potenziellen Publikums betreffen, zu erzeugen; und
einen Ausgang, dazu konfiguriert, die eine oder mehrere Eigenschaften des Publikums oder potenziellen Publikums auszugeben;
**gekennzeichnet**
**durch** einen kabellosen Zugriffspunkt, der dazu konfiguriert ist, WLAN-Sondenanfragen von WLAN-fähigen Vorrichtungen in der Nähe der Präsentationsvorrichtung zu erkennen; und
**dadurch**, dass der kabellose Zugriffspunkt einen Kernel umfasst, der dazu konfiguriert ist, den kabellosen Zugriffspunkt so zu konfigurieren, dass er den Inhalt der Sondenanfragen nicht erfasst oder ausliest.

10. System nach Anspruch 9, wobei die eine oder mehrere Eigenschaften umfassen:
i) eine Größe des Publikums oder potenziellen Publikums;
ii) das Geschlecht des Publikums oder potenziellen Publikums;
iii) das Alter des Publikums oder potenziellen Publikums;
iv) die Haushaltsgröße des Publikums oder potenziellen Publikums;
v) das Einkommen des Publikums oder potenziellen Publikums; und/oder
vi) Produktinteressen des Publikums oder potenziellen Publikums.

11. System nach Anspruch 9 oder 10, wobei der Kernel dazu konfiguriert ist, die Erzeugung einer Zufalls- oder Pseudozufallszahl oder -zeichenfolge in Reaktion auf die Erkennung einer Sondenanfrage auszulösen.

12. System nach einem der Ansprüche 9 bis 11, wobei die empirischen Daten Daten beinhalten, die eine Anzahl von Sondenanfragen einer Größe des Publikums oder potenziellen Publikums des präsentierten Inhalts zuordnen.

13. System nach Anspruch 9 oder 10, ferner umfassend:
(i) ein Gesichtsverfolgungssystem, dazu konfiguriert, Gesichter in der Nähe der Präsentationsvorrichtung zu erkennen; und/oder
(ii) das eine oder mehrere in der Nähe der Präsentationssoftware installierte Bluetooth(Marke)-Baken und Erkennungssoftware, die dazu konfiguriert ist, Bluetooth-Bakensignale zu erkennen, und auf Smartphones von Mitgliedern des Publikums oder potenziellen Mitgliedern des Publikums installiert ist, umfasst oder dazu konfiguriert ist, sie einzusetzen, wobei die Erkennungssoftware dazu konfiguriert ist, auf die Bluetooth-Baken durch Übertragen einer ID von dem Bluetooth-Baken-Signal an das System zu reagieren, wodurch das System auf die Nähe des Smartphones aufmerksam gemacht wird.

14. System nach einem der Ansprüche 9 bis 13, ferner umfassend einen Inhaltsplaner, dazu konfiguriert, die Präsentation des Inhalts durch die Präsentationsvorrichtung zu steuern.

15. System nach Anspruch 14, dazu konfiguriert, den Inhaltsplaner entsprechend der einen oder mehrerer Eigenschaften des Publikums oder potenziellen Publikums zu steuern.

16. System nach Anspruch 9, ferner umfassend ein Gesichtsverfolgungssystem, dazu konfiguriert, Gesichter in der Nähe der Präsentationsvorrichtung zu erkennen, wobei die empirischen Daten Daten beinhalten, die eine Anzahl erkannter Gesichter einer Größe des Publikums oder potenziellen Publikums des präsentierten Inhalts zuordnen.

17. Computerprogrammcode, dazu konfiguriert, wenn er durch eine oder mehrere Prozessoren ausgeführt wird, das Verfahren nach einem der Ansprüche 1 bis 8 umzusetzen.

18. Computerlesbares Medium, umfassend den Computerprogrammcode nach Anspruch 17.

## Revendications

1. Méthode mise en œuvre par ordinateur en vue de la caractérisation d'une audience en temps réel, la méthode comprenant :
la détection automatique d'un ou de plusieurs événements associés et émanant de membres de l'audience ou de membres de l'audience potentielle à proximité d'un dispositif de présentation configuré afin de présenter du contenu ;
l'enregistrement ou le comptage des événements sous forme anonyme ;
la génération d'une ou de plusieurs caractéristiques d'une audience ou d'une audience potentielle du contenu présenté en traitant les événements ou leur nombre selon des données empiriques appartenant à l'une ou aux plusieurs caractéristiques de l'audience ou de l'audience potentielle ; et
la sortie d'une ou de plusieurs caractéristiques de l'audience ou de l'audience potentielle ;
**caractérisée en ce que**
la détection automatique d'un ou de plusieurs événements comprend la détection de requêtes de sonde Wi-Fi issues de dispositifs activés par Wi-Fi de membres de l'audience ou de membres de l'audience potentielle aux alentours du dispositif de présentation avec un point d'accès sans fil, et
le point d'accès sans fil comprend un noyau configuré afin de commander le point d'accès sans fil pour qu'il n'enregistre ni ne lise du contenu des requêtes de sonde.

2. Méthode telle que revendiquée dans la revendication 1, dans laquelle l'une ou les plusieurs caractéristiques comprennent :
i) une taille de l'audience ou de l'audience potentielle ;
ii) le sexe de l'audience ou de l'audience potentielle ;
iii) l'âge de l'audience ou de l'audience potentielle ;
iv) la taille du ménage de l'audience ou de l'audience potentielle ;
v) le revenu de l'audience ou de l'audience potentielle ; et/ou
vi) les intérêts en matière de produits de l'audience ou de l'audience potentielle.

3. Méthode selon la revendication 1 ou 2, dans laquelle le noyau est configuré afin de déclencher la génération d'un nombre ou d'une chaîne aléatoire ou pseudo-aléatoire en réponse à la détection d'une requête de sonde.

4. Méthode telle que revendiquée dans une quelconque des revendications 1 à 3, dans laquelle les données empiriques comportent des données qui mettent en corrélation un nombre de requêtes de sondes avec une taille de l'audience ou de l'audience potentielle du contenu présenté.

5. Méthode telle que revendiquée dans une quelconque des revendications précédentes, dans laquelle la détection de l'un ou des plusieurs événements
(i) comprend la détection de visages aux alentours du dispositif de présentation avec un système de suivi des visages ; et/ou
(ii) comporte l'emploi d'une ou de plusieurs balises Bluetooth installées aux alentours du dispositif de présentation, et d'un logiciel de détection configuré afin de détecter des signaux de balises Bluetooth et installé sur les smartphones des membres de l'audience ou des membres de l'audience potentielle, sachant que le logiciel de détection répond aux balises Bluetooth en transmettant au système un identifiant issu du signal de balise Bluetooth, alertant ainsi le système de la proximité du smartphone.

6. Méthode telle que revendiquée dans une quelconque des revendications précédentes, dans laquelle la détection automatique de l'un ou des plusieurs événements comprend la détection de visages aux alentours du dispositif de présentation avec un système de suivi des visages, et les données empiriques comportent des données qui mettent en corrélation un nombre de visages reconnus avec une taille de l'audience ou de l'audience potentielle du contenu présenté.

7. Méthode telle que revendiquée dans une quelconque des revendications précédentes, comportant la commande de la présentation du contenu par le dispositif de présentation selon l'une ou les plusieurs caractéristiques de l'audience ou de l'audience potentielle.

8. Méthode telle que revendiquée dans une quelconque des revendications précédentes, dans laquelle le contenu présenté comprend du contenu visuel et/ou du contenu audio.

9. Système en vue de la caractérisation d'une audience en temps réel, le système comprenant :
un détecteur d'événement configuré afin de détecter automatiquement un ou plusieurs événements associés et émanant de membres de l'audience ou de membres de l'audience potentielle à proximité d'un dispositif de présentation configuré afin de présenter du contenu ;
un compteur d'événements configuré afin d'enregistrer ou de compter les événements sous forme anonyme ;
une commande configurée afin de générer une ou plusieurs caractéristiques de l'audience ou de l'audience potentielle du contenu présenté en traitant les événements ou leur nombre selon des données empiriques appartenant à l'une ou aux plusieurs caractéristiques de l'audience ou de l'audience potentielle ; et
une sortie configurée afin de sortir une ou plusieurs caractéristiques de l'audience ou de l'audience potentielle ;
**caractérisé par**
un point d'accès sans fil configuré afin de détecter les requêtes de sonde Wi-Fi issues de dispositifs activés par Wi-Fi aux alentours du dispositif de présentation ; et
le point d'accès sans fil comprend un noyau configuré afin de contrôler le point d'accès sans fil pour qu'il n'enregistre ni ne lise le contenu des requêtes de sonde.

10. Système tel que revendiqué dans la revendication 9, dans lequel l'une ou les plusieurs caractéristiques comprennent :
i) une taille de l'audience ou de l'audience potentielle ;
ii) le sexe de l'audience ou de l'audience potentielle ;
iii) l'âge de l'audience ou de l'audience potentielle ;
iv) la taille du ménage de l'audience ou de l'audience potentielle ;
v) le revenu de l'audience ou de l'audience potentielle ; et/ou
vi) les intérêts en matière de produits de l'audience ou de l'audience potentielle.

11. Système tel que revendiqué soit dans la revendication 9, soit dans la 10, dans lequel le noyau est configuré afin de déclencher la génération d'un nombre ou d'une chaîne aléatoire ou pseudo-aléatoire en réponse à la détection d'une requête de sonde.

12. Système tel que revendiqué dans une quelconque des revendication 9 à 10, dans lequel les données empiriques comportent des données qui mettent en corrélation un nombre de requêtes de sondes avec une taille de l'audience ou de l'audience potentielle du contenu présenté.

13. Système tel que revendiqué soit dans la revendication 9, soit dans la 10, comprenant par ailleurs
(i) un système de détection de visages configuré afin de détecter des visages aux alentours du dispositif de présentation ; et/ou
(ii) comporte ou est configuré afin d'employer une ou plusieurs balises Bluetooth (marque déposée) installées aux alentours du dispositif de présentation, et un logiciel de détection configuré afin de détecter les signaux de balises Bluetooth et installé sur les smartphones des membres de l'audience ou des membres de l'audience potentielle, dans lequel le logiciel de détection est configuré afin de répondre aux balises Bluetooth en transmettant au système un identifiant issu du signal de balise Bluetooth, alertant ainsi le système de la proximité du smartphone.

14. Système tel que revendiqué dans une quelconque des revendications 9 à 13, comprenant par ailleurs un programmateur de contenu configuré afin de commander la présentation du contenu par le dispositif de présentation.

15. Système tel que revendiqué dans la revendication 14, configuré afin de commander le programmateur de contenu selon l'une ou les plusieurs caractéristiques de l'audience ou de l'audience potentielle.

16. Système tel que revendiqué dans la revendication 9, comprenant par ailleurs un système de détection de visages configuré afin de détecter des visages aux alentours du dispositif de présentation, dans lequel les données empiriques comportent des données qui mettent en corrélation un nombre de visages reconnus avec une taille de l'audience ou de l'audience potentielle du contenu présenté.

17. Code de programme informatique configuré, lorsqu'il est exécuté par l'un ou les plusieurs processeurs, afin de mettre en œuvre la méthode selon une quelconque des revendications 1 à 8.

18. Support lisible par ordinateur comprenant le code de programme informatique selon la revendication 17.
